Europäisches Patentamt

European Patent Office

Office européen des brevets

(11) Publication number: **0 304 270**
**A2**

## (12) EUROPEAN PATENT APPLICATION

(21) Application number: **88307580.6**

(22) Date of filing: **16.08.88**

(51) Int. Cl.⁴: **B 27 B 33/14**
**B 23 D 65/00, F 16 B 19/04,**
**B 21 J 15/02**

(30) Priority: **18.08.87 US 86612**

(43) Date of publication of application:
**22.02.89 Bulletin 89/08**

(84) Designated Contracting States:
**CH DE FR GB IT LI SE**

(71) Applicant: **BLOUNT, INC.**
**5550 S.W. Macadam Avenue**
**Portland Oregon 97201 (US)**

(72) Inventor: **Huntington, Kent. L.**
**14560 South Bagby Road**
**Molalla Oregon 97038 (US)**

**Harfst, Michael D.**
**3410 S.E. Deswell**
**Milwaukie Oregon 97267 (US)**

(74) Representative: **Jones, Ian et al**
**POLLAK MERCER & TENCH High Holborn House 52-54**
**High Holborn**
**London WC1V 6RY (GB)**

(54) **Riveted structure.**

(57) A riveted structure includes a rivet opening (28;128;228;328;428) including a frustoconical surface (32a;132a;232a;332a) intermediate the inboard and outboard surfaces of a plate and a generally cylindrical surface (34a;534a;634a) outboard of the frustoconical surface and terminating at the outboard surface of the plate, the cylindrical surface having a substantially larger diameter than that of the frustoconical surface, and a rivet (14) having a shank (38) deformed into the opening completely to fill the same and achieve a rivet head profile of substantially reduced height.

FIG. I

EP 0 304 270 A2

## Description

### RIVETED STRUCTURE

This invention relates to a riveted structure and rivetting method, more particularly, to a recessed head riveted structure and method suitable for use in fabricating chain.

Recessed head rivets are well-known in the aircraft industry where fully countersunk head rivets have long been known. Connections are made using rivets wherein the rivet head is substantially flush with the outer surface of the metal element which is joined. This type of connection has been known since at least United States Patent 264,502, dated September 19, 1882. More recent examples can be seen in United States Patents 2,302,772 and 2,361,770.

Riveted connections are also used in the fabrication of chain and particularly in chain used in chain saws. Such chain typically includes a plurality of pivotally interconnected cutting links, side links and centre drive links. These links are all connected by rivets which extend through aligned holes in the respective parts.

Generally, the rivets have heads which are deformed by spinning or peening to hold the rivets in place. Since the typical hole in a link provides only a minor chamfer adjacent the mouth thereof, the majority of the head of the rivet extends outwardly from the side of the link. This perforce increases the width of the chassis of the chain. The protruding head also results in "hang-up" of material on the edge or lip of the rivet. A protruding head riveted saw chain is disclosed in United States Patent 2,897,857.

United States Patent 2,798,381, reissued as Re. 24,475, discloses a saw chain construction wherein the links are connected together by recessed head rivets. The rivets, however, merely serve to hold the oppositely disposed side links in position, that is, the rivets do not serve as bearing surfaces.

The invention accordingly provides a rivetted structure comprising adjacent members having aligned rivet openings extending through them, the one of the openings at which a rivet shank is deformed to retain the rivet in the openings having a generally frustoconical portion diverging outwardly, and a generally cylindrical portion at the free surface of the member of greater diameter than the generally frusto-conical portion. The opening can thus readily receive the material of the rivet head, and has a surface portion intermediate the generally frusto-conical and cylindrical portions providing an increased underlying support area for the rivet head. Pull-through of the rivet is better resisted and the angle of the generally frusto-conical portion and/or the shape of the intermediate portion can be selected to enhance resistance to pull through.

Moreover, a portion of the opening is advantageously shaped so as to prevent rotation of the rivet, as by being made assymetrical about the axis of the opening, or axially inclined to the axis.

The invention also provides a riveted structure comprising adjacent members having aligned rivet openings extending through them, the opening at which a rivet shank is deformed to retain the rivet in the openings having a portion shaped to oppose rotation of the rivet. The opening may advantageously have the generally frusto-conical and cylindrical portions described above, and the former may for example be inclined to the axis of the opening as a whole, the latter portion may be non-circular, or the intermediate surface portion may be non-uniformly shaped to prevent rivet rotation.

The invention also provides a method of making such rivetted structures.

The riveted structure of the invention can be embodied in chain used in chain saws, the rivet head being more protected, exerting less drag on the outside surface, being better looking, and providing a narrower chain chassis than has heretofore been possible.

The head of the rivet can be almost flush with the outer surface of the side link for the chain, thereby to minimize chassis width and to reduce "hang-up" of material on the lip of the rivet as it passes through the kerf. A chain with a narrower chassis permits a narrower kerf to be cut.

The invention is further described below, by way of example, with reference to the accompanying drawings, in which:

Fig. 1 is a fragmentary perspective view of a saw chain in position on a chain saw guide bar, the chain incorporating a riveted structure in accordance with the present invention;

Fig. 2 is a cross-sectional view on an enlarged scale showing the riveted connection of the structure;

Fig. 3 is a schematic view showing a spinner in position to engage the shank of a rivet to achieve the riveted structure of the invention;

Fig. 4 is a side view of a plate having a rivet opening or hole in accordance with the invention, wherein one portion of the rivet opening has an axis offset laterally from the axis of a second portion to prevent rotation of the rivet in the rivet hole;

Figs. 5, 6, 7 and 8 are sectional views of different rivet holes in accordance with the invention incorporating respectively second, third, fourth and fifth means for preventing rotation of the rivet in the rivet hole;

Fig. 9 is a side view of a plate having another rivet hole in accordance with the invention;

Fig. 10 is a sectional view on line 10-10 of Fig. 9;

Fig. 11 is a side view of a plate having a still further rivet opening in accordance with the invention; and

Fig. 12 is a sectional view on line 12-12 of Fig. 11.

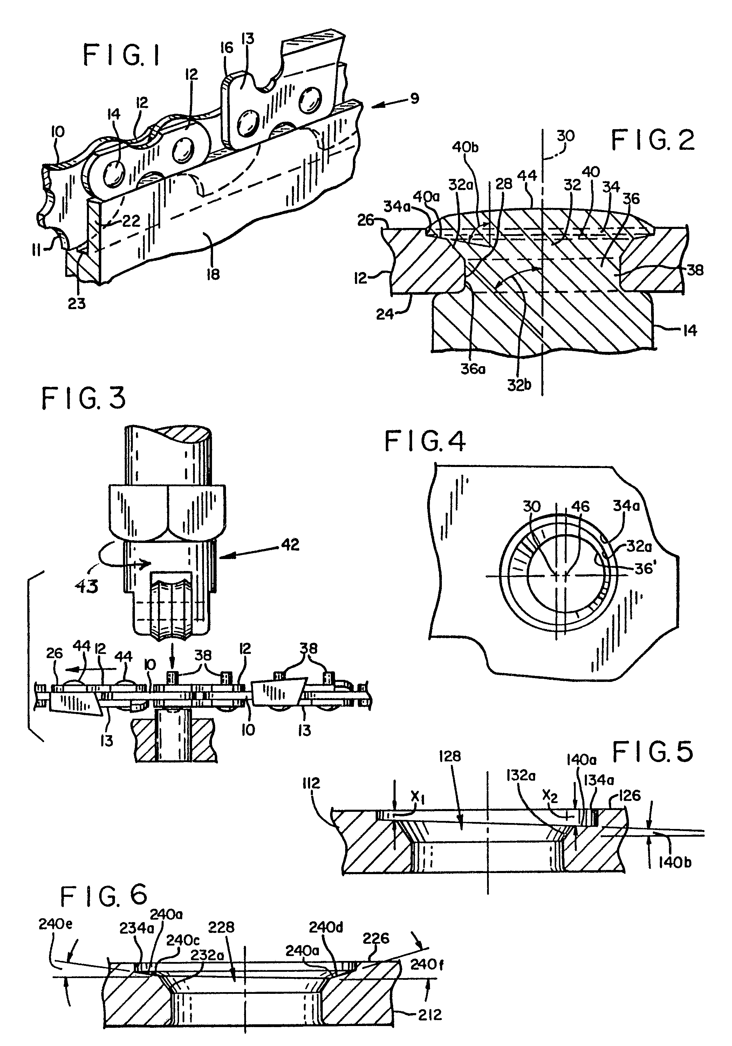

Fig. 1 of the drawings illustrates a length of chain 9 comprising a plurality of longitudinally spaced-apart centre links 10 having sprocket-engaging root portions 11 which are shaped to be engaged by a driving sprocket (not shown) of a chain saw. The links 10 are pivotally connected together by means of oppositely disposed side links or side plates 12 and 13, and by rivets 14 forming pivot pins for the various links and extending through suitable rivet apertures or holes in the side plates 12 and 13. The side plates 12 are simple connector plates and are all identical. Each of the side plates 13 is formed with a hook-shaped tooth on its upper edge and with a depth gauge 16 ahead of the tooth. Alternate side plates 13 are allochiral. The chain 9 is shown as being guided upon a chainsaw guide bar 18 formed with a pair of spaced rails 22 upon which the side plates 12 and 13 are supported. The rails 22 define a slot or groove 23 between them for receiving the centre link root portions 11.

Fig. 2 illustrates the rivet 14 in a rivet hole or opening 28 in the side plate 12 which has an inboard surface 24 and an outboard surface 26. A centre link 10 is disposed adjacent the inboard surface 24 of the plate 12.

The invention provides a particular configuration of the rivet opening 28 in the plate 12. The opening 28 has an axis 30 which is perpendicular to surface 26 and it comprises a frustoconical or countersunk portion 32 which is defined by a frustoconical surface 32a which makes an angle 32b with the axis 30. The angle 32b ranges from about twenty degrees to about forty-five degrees and is preferably about thirty-five degrees. The frustoconical portion 32 is disposed intermediate inboard and outboard surfaces 24,26.

The opening 28 further comprises a generally cylindrical portion 34 which is defined by a generally cylindrical surface 34a which terminates at the outboard surface 26 of the plate 12. The cylindrical portion 34 has a diameter substantially greater than the greatest diameter of the frustoconical portion 32.

Finally, the opening 28 comprises a second cylindrical portion 36 which is defined by a second cylindrical surface 36a which commences at the inboard surface 24 of the plate 12 (adjacent the link 10) and terminates at the inboard edge of the frustoconical surface 32a. The second cylindrical portion 36 is, of course, sized to accommodate the shank 38 of the rivet 14. In a typical structure, in which the thickness of the plate 12 is 0.13 cm. (0.050 inch), the cylindrical portion 36 is about 0.30 cm. (0.120 inch) in diameter. The diameter of the outboard edge of the cylindrical portion 34 is then preferably about 0.44 cm. (0.172 inch) and the height of cylindrical portion 34 is preferably about 0.03 cm. (0.10 inch).

Extending between the cylindrical surface 34a and the frustoconical surface 32a is a second frustoconical surface 40a, which forms a portion 40 of the opening 28, and th elements of which make a second angle 40b with the axis 30. The angle 40b is substantially greater than the angle 32b between the elements of the frustoconical surface 32a and axis 30. The angle 40b ranges from about sixty degrees to about eighty degrees and is preferably about eighty degrees. Stated otherwise, the surface 40a defines a second frustoconcial portion of the opening 28 the elements of which preferably slope about ten degrees inwardly and downwardly from surface 26, thereby to form a shallow "counterbore" type of region above the countersunk or first frustoconical portion 32, and this provides significant underlying support area for the rivet head.

In fabricating a riveted structure according to the invention and particularly in fabricating saw chains, the rivet opening 28 is preferably made by a multiple punch process. In this process a pilot hole, preferably 0.28 cm. (0.110 inch) on diameter, is first punched in plate 12. A second punch creates in one stroke the 0.44 cm. (0.172 inch) outer diameter cylindrical surface 34a, the ten degree inwardly sloping frustoconical surface 40a and the thirty-five degree frustoconical surface 32a. Thereafter a third punch crates the 0.30 cm. (0.120 inch) diameter cylindrical portion 36. An opening punched in the centre link 10 is sized to accommodate the shank of the rivet. Rivet 14 is then placed through the opening of link 10 with its shank 38 extending through the opening 28 and outboard of the surface 26.

As shown in Fig. 3, a spinner 42, rotating as indicated by arrow 43, engages the shank 38 causing the metal to spin radially outwardly, deforming the metal, completely to fill with metal the "counterbored" portion (cylindrical portion 34 and the inwardly sloping or frustoconical portion 40) and the countersunk or frustoconical portion 32. A rivet head 44 is thereby formed which becomes almost flush with the outer surface 26 of the plate 12.

Numerous advantages flow from this construction. There is more rivet head mass above the countersunk or first frustoconical portion 32 to prevent rivet pull-out. There is more underlying support area for the rivet head 44 due to the substantially greater diameter of the "counterbored" portion, that is, the substantially greater diameter of the cylindrical portion 34 and the frustoconical or inwardly sloped portion 40. This "counterbored" portion provides a definite region in which the deformed rivet head is captured to maintain a desired metal flow, shape and strength in the head. The rivet spinning process causes the metal to spin radially outwardly to give a good flow which completely fills the region above the countersunk or first frustoconical portion 32, as well as the portion 32 itself.

Furthermore, the preferred ten degree sloping "floor" of the "counterbored" portion provides a good "lock-in" characteristic. This aids in resisting pull-through of the rivet which might otherwise occur if the rivet opening included only the usual high-slope angled countersink or chamfer, that is, only a countersunk or first frustoconical portion 32.

Another advantage is that the invention does not require use of a preformed countersunk-style rivet which is typically used to achieve a flush riveted connection. Finally, the flatter profile of the rivet head 44 achieves a reduced rivet height which allows, in a saw chain, a narrower chain chassis to be achieved and also reduces the possibility of "hang-up" of material on the lip of the rivet.

If desired, the inboard cylindrical portion 36 may be punched with an axis 46 laterally offset from the axis 30 of the portions 32, 34 and 40, as shown in Fig. 4. A cylindrical portion 36' is thus achieved which is nonconcentric with the counterbored portion, that is, the entire formed head portion 44 of the rivet 14 (portions 32, 34 and 40) is eccentric with respect to the shank 38 which fills the portion 36'. This prevents the rivet 14 from turning in the opening 28.

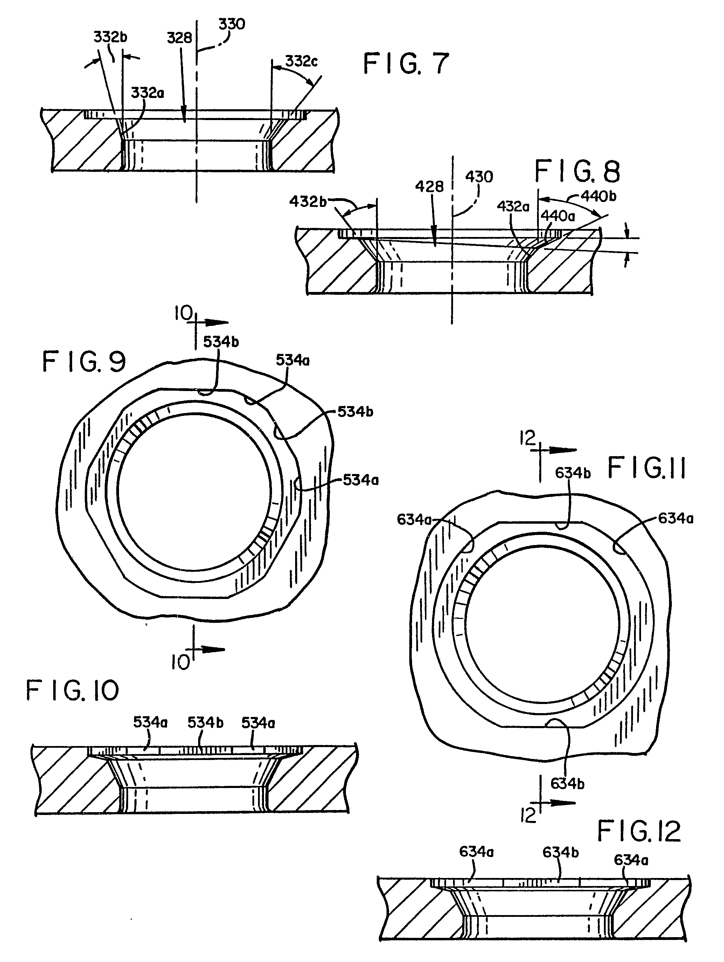

Figs. 5-12 illustrate other ways to prevent rivet rotation. The embodiments of these figures have openings which include portions corresponding to those of openings 28 except for the modifications described below.

Fig. 5 shows an embodiment wherein an opening 128 comprises an annular planar surface 140a disposed between a first frustoconical surface 132a and a larger diameter cylindrical surface 134a. Surface 140a is sloped or forms an angle 140b with the outboard surface 126 of side plate 112. This achieves a camming effect which prevents rivet rotation.

Fig. 6 discloses an embodiment wherein an opening 228 is punched to provide a surface 240a disposed between a first frustoconical surface 232a and a larger diameter cylindrical surface 234a. The surface 240a comprises two portions 240c and 240d, each of which is sloped or forms a different angle 240e, 240f, respectively, with the outboard surface 226 of the side plate 212. This also achieves a camming effect, which prevents rivet rotation.

Fig. 7 illustrates an embodiment wherein an opening 328 comprises a countersunk or frustoconical surface 332a having elements which form different angles 332b, 332c with the axis 330 of the opening. This also prevents rivet rotation.

Fig. 8 illustrates an embodiment wherein an opening 428 includes a surface 440a which forms an angle 440b with the axis 430 of the opening that is different from the angle 432b between the elements of a frustoconical surface 432a and the axis 430. This again prevents rivet rotation.

Figs. 9 and 10 illustrate an embodiment wherein an opening with a first generally cylindrical surface 534a which comprises a plurality of flat surface portions 534b to prevent rivet rotation.

Figs. 11 and 12 illustrate an embodiment similar to that of Figs. 9 and 10 wherein the first generally cylindrical surface 634a includes two opposed flat surface portions 634b which prevent rivet rotation.

It will be apparent to those skilled in the art that the invention permits modification of the illustrated embodiments within its scope as defined in the following claims.

**Claims**

1. A riveted structure comprising a first plate (12) having an inboard and an outboard surface, a second plate (10) disposed adjacent the inboard surface of the first plate, a rivet opening through the plates and having an axis perpendicular to the first and second plates, the opening (28;128;228;328;428) in the first plate comprising a generally frustoconical surface (32a;132a;232a;332a;332b;332c) intermediate the inboard and outboard surfaces of the first plate and defining a frustoconical portion (32) of the opening, a generally cylindrical surface (34a;234a;534a;634a) outboard of the frustoconical surface and terminating at the outboard surface of the first plate, the generally cylindrical surface defining a generally cylindrical portion (34) of the opening, the generally cylindrical surface having a diameter substantially greater than the diameter of the frustoconical surface; and a rivet (14) deformed into the opening to fill completely the frustoconical portion and the generally cylindrical portion thereof, thereby to retain the rivet in the opening.

2. A rivetted structure as claimed in claim 1 comprising means to prevent rotation of the rivet (14) in the rivet opening.

3. A rivetted structure comprising a first plate (12) having an inboard and an outboard surface, a second plate (10) disposed adjacent the inboard surface of the first plate, a rivet opening through the plates and having an axis perpendicular to the plates, and a rivet (14) deformed into the opening (28;128;228;328;428) in the first plate, characterized in that the first plate opening has a portion (36';40a;140;240a;534a) which is non-symmetrical with respect to the axis to thereby prevent rotation of the rivet.

4. A rivetted structure as claimed in claim 3 wherein the first plate opening (28;128;228;328;428) comprises a generally frusto-conical surface (32a;132a;232a;332a;332b;332c) intermediate the inboard and outboard surfaces of the first plate and defining a frusto-conical portion (32) of the opening, and a generally cylindrical surface (34a;234a;534a;634a) outboard of the frusto-conical surface and terminating at the outboard surface of the first plate, the generally cylindrical surface defining a generally cylindrical portion (34) of the opening.

5. A rivetted structure as claimed in claim 4 wherein the generally cylindrical surface (34a;234a;534a;634a) has a diameter substantially greater than the diameter of the frustoconical surface (32a;132a;232a;332a;332b;332c).

6. A rivetted structure as claimed in claim 1, 4 or 5 wherein the angle (32b) between the frustoconical surface and the axis of the opening is in the range of about twenty degrees to about forty degrees.

7. A rivetted structure as claimed in claim 6 wherein the angle (32b) is about thirty-five degrees.

8. A rivetted structure as claimed in any one of claims 1 and 5-7 wherein the opening in the first plate comprises a second frustoconical surface (40a;140a;240a;440a) disposed between the first-mentioned frustoconical surface and the first-mentioned generally cylindrical surface, the second frustoconical surface defining a second frustoconical portion (40) of the opening, the second frustoconical surface making an angle with the axis of the opening which is substantially greater than the angle made by the first frustoconical surface with the axis of the opening.

9. A rivetted structure as claimed in claim 8 wherein the angle between the second frustoconical surface (40a) and the axis of the opening is in the range of about sixty degrees to about eighty degrees.

10. A rivetted structure as claimed in claim 9 wherein the angle between the second frustoconical surface (40a) and the axis of the opening is about eighty degrees.

11. A rivetted structure as claimed in any one of claims 1 and 5-7 wherein the opening comprises a planar surface (140a) between the frustoconical surface and the generally cylindrical surface, the planar surface being inclined to the outboard surface of the first plate.

12. A rivetted structure as claimed in any one of claims 1 and 5-7 comprising a surface (240a) disposed between the frustoconical surface and the generally cylindrical surface, the surface comprising at least two portions (240c,240d), the portions forming different angles with the outboard surface of the first plate.

13. A rivetted structure as claimed in any one of claims 1 and 4-12 wherein the generally cylindrical surface comprises at least one flat surface portion (534a,534b;634a,634b) thereby to prevent rotation of the rivet in the rivet opening.

14. A rivetted structure as claimed in any one of claims 1 and 4-10 wherein the opening in the first plate (12) comprises a second cylindrical surface (36a) commencing adjacent the inboard surface of the first plate and terminating at the frusto-conical surface, the second cylindrical surface having an axis (46) offset laterally from the axis (30) of the frustoconical surface.

15. A method of rivetting a first metal plate (12) having an inboard surface and an outboard surface to a second metal plate (10) disposed adjacent the inboard surface of the first plate, the method comprising the steps of:
punching a pilot hole in the first plate;
punching an opening in the first plate co-axially with the pilot hole and adjacent the outboard surface of the plate, the opening comprising a generally frustoconical portion (32) having a frustoconical surface (320;132a;232a;332a;332b;332c) intermediate the inboard and outboard surfaces of the first plate and a first generally cylindrical portion (34) outboard of the first frusto-conical portion and terminating at the outboard surface of the first plate, the first generally cylindrical portion having a first generally cylindrical surface (34a;234a;534a;634a), the surface having a diameter substantially larger than the outboard end of the first frustoconical portion; and
punching a second cylindrical opening generally centrally of the first opening, the second cylindrical opening comprising a second cylindrical surface (36a) between the first frustoconical surface and the inboard surface of the first plate, the second cylindrical opening having a diameter generally equal to the diameter of the shank (38) of a rivet (14);
punching an opening in the second plate to receive the shank of the rivet;
placing the rivet in the opening of the second plate, the rivet comprising a head and a shank, the shank extending through the opening in the second plate and outboard of the outboard surface of the first plate; and
deforming the metal in the shank adjacent the outboard surface of the first plate completely to fill the first generally cylindrical portion and the frustoconical portion of the first opening in the first plate, thereby to rivet the first and second plates together.

16. A method as claimed in claim 15 wherein the opening in the first plate comprises a second frustoconical portion (40) disposed between the first-mentioned frustoconical portion and the first generally cylindrical portion, the second frustoconical portion having a second frustoconical surface (40a;140a;240a) the first and second frustoconical surfaces each making an angle with the axis of the first opening, the angle between the second frustoconical surface and the axis of the opening being substantially greater than the angle between the first frustoconical surface and the axis of the opening.

17. A method as claimed in 15 or 16 comprising punching the second cylindrical opening along an axis offset laterally from the axis of the first opening.

18. A method as claimed in claim 15 wherein the opening in the first plate comprises a planar surface (140a) disposed between the frustoconical surface and the first generally cylindrical surface, the planar surface forming an angle with the outboard surface of the first plate.

19. A method as claimed in claim 15 wherein the opening in the first plate comprises a surface (240a) disposed between the frustoconical surface and the first generally cylindrical surface, the surface comprising at least two portions (240c,240d) forming different angles with the outboard surface of the first plate.

FIG.1

FIG.2

FIG.3

FIG.4

FIG.5

FIG.6

FIG. 7

FIG. 8

FIG. 9

FIG. 10

FIG. 11

FIG. 12